Europäisches Patentamt

European Patent Office

Office européen des brevets

(19)

(11) Publication number: **0 165 178**
**A2**

(12) **EUROPEAN PATENT APPLICATION**

(21) Application number: **85401179.8**

(22) Date of filing: **14.06.85**

(51) Int. Cl.⁴: **G 06 K 15/14**

(30) Priority: **14.06.84 US 620771**

(43) Date of publication of application:
**18.12.85 Bulletin 85/51**

(84) Designated Contracting States:
**DE FR GB IT NL**

(71) Applicant: **Benson, Inc.**
**2694 Orchard Parkway**
**San Jose California 95152(US)**

(72) Inventor: **Gill, Sam S.**
**172 Shooting Star Isle**
**Foster City California 94404(US)**

(72) Inventor: **Kamas, Peter**
**1186 South Mary Avenue**
**Sunnyvale California 94087(US)**

(72) Inventor: **Schmidt, Noel J.**
**4009 Middlefield Road**
**Palo Alto California 94303(US)**

(74) Representative: **Chareyron, Lucien**
**Schlumberger Limited Service Brevets c/o Giers 12, place**
**des Etats Unis B.P. 121**
**F-92124 Montrouge Cédex(FR)**

(54) Method and apparatus for improving the line write time of electrostatic printer/plotter.

(57) An electrostatic raster scan line printer/plotter having a printhead with a plurality of styli and a plurality of backplates selectively decreases the required write time per scan line by skipping the driving of selected styli and the charging of selected portions of backplates in response to detecting input data corresponding to a plurality of non-displayable dots in the scan line.

FIG. 2

EP 0 165 178 A2

METHOD AND APPARATUS FOR IMPROVING
THE LINE WRITE TIME OF
ELECTROSTATIC PRINTER/PLOTTERS

## BACKGROUND OF THE INVENTION

### Field of Invention

This invention relates generally to electrostatic printer/plotters
and particularly to electrostatic printer/plotters having a plurality of styli
for forming an image from a plurality of dots.

### Description of the Prior Art

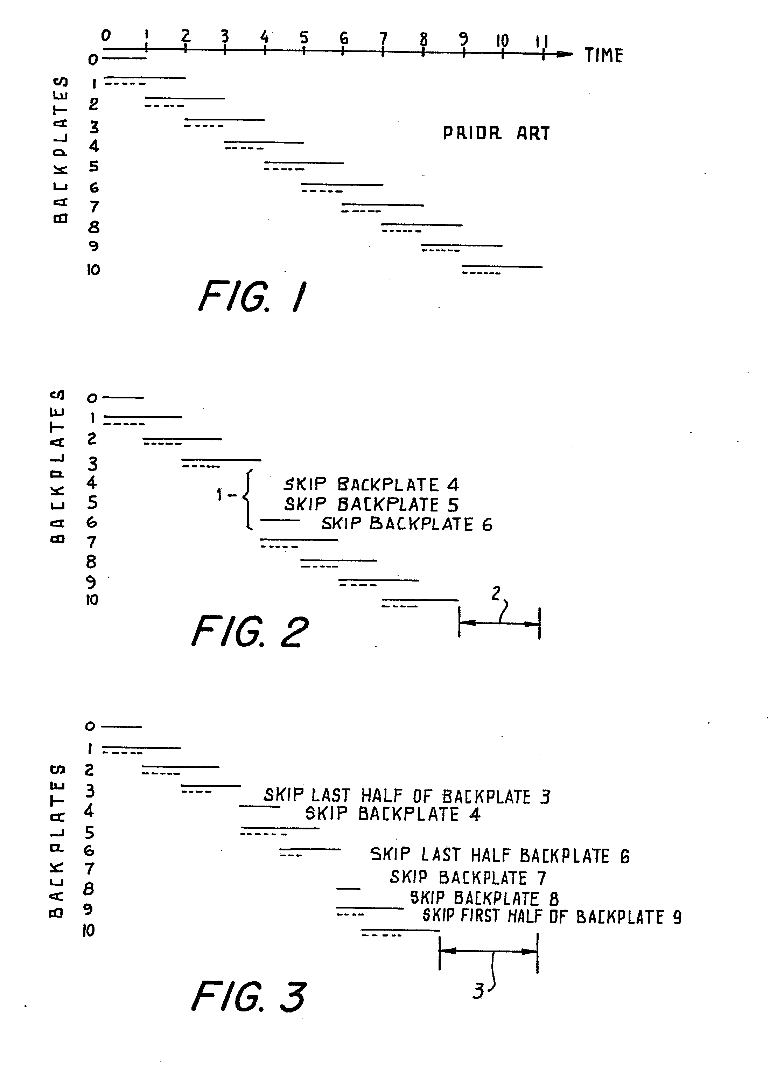

An electrostatic printer/plotter representative of the prior art is
disclosed in U.S. Patent 4,417,391 filed June 8, 1982, and issued November 29,
1983.  As disclosed in the patent, a raster scan across the recording head
requires the sequential charging of 28 backplates opposite the recording
head.  The controller first turns on the first backplate, drives selected
styli of 256 styli opposite the first backplate, then turns on the second
backplate, drives selected styli of 256 styli opposite the second backplate
and sequentially repeats until all 28 backplates have been charged and the
scan across the recording head completed.  Figure 1 discloses the sequential
backplate charging as represented by a solid line, and the driving of selected
styli, as represented by a dotted line, for ten backplates.  A major disadvantage of the prior art is that each raster scan line requires the same
amount of time irrespective of the image to be displayed.

## SUMMARY OF THE INVENTION

This invention overcomes the disadvantages of the prior art and
increases the print speed of electrostatic printer/plotters through selectively decreasing the required write time per scan line by skipping the
driving of selected styli and the charging of selected portions of backplates in response to detecting input data corresponding to a plurality of
non-displayable dots in the scan line.

## BRIEF DESCRIPTION OF THE DRAWINGS

Figure 1 is a diagram illustrating the backplate charging and styli selection sequence of a prior art printer for a scan line wherein ten backplates are indicated.

Figure 2 is a diagram illustrating one backplate charging and styli selection sequence in accordance with the invention.

Figure 3 is a diagram illustrating another backplate charging and styli selection sequence in accordance with the invention.

Figure 4 is a block diagram of an electrostatic printer/plotter.

Figure 5 is a flow chart depicting the enhanced operation of INPUT CONTROL 20.

Figure 6 is a detailed block diagram of INPUT CONTROL 20.

Figure 7 is a flow chart depicting the enhanced operation of WRITE CONTROL 30.

## DETAILED DESCRIPTION OF THE PREFERRED EMBODIMENTS

Figure 1 shows the prior art method of backplate charging and styli selection for each scan line. Referring to Figure 2, a backplate charging and styli selection sequence in accordance with the invention is shown wherein three backplates shown as point 1 are skipped in response to the preferred embodiment detecting data in an applied input data stream corresponding to a displayable raster line wherein the data indicates there are no displayable dots in the raster line corresponding to styli associated with backplates 4, 5 and 6. The preferred embodiment skips backplates 4, 5 and 6 and proceeds to backplate 7 thereby reducing the scan line writing time by the amount indicated by 2. Referring to Figure 3, another backplate charging and styli selection sequence in accordance with the invention is shown wherein the last half of backplate 3, backplate 4, the last half of backplate 6, backplate 7, backplate 8 and the first half of backplate 9 are skipped thereby reducing the raster line write time by an amount illustrated by point 3.

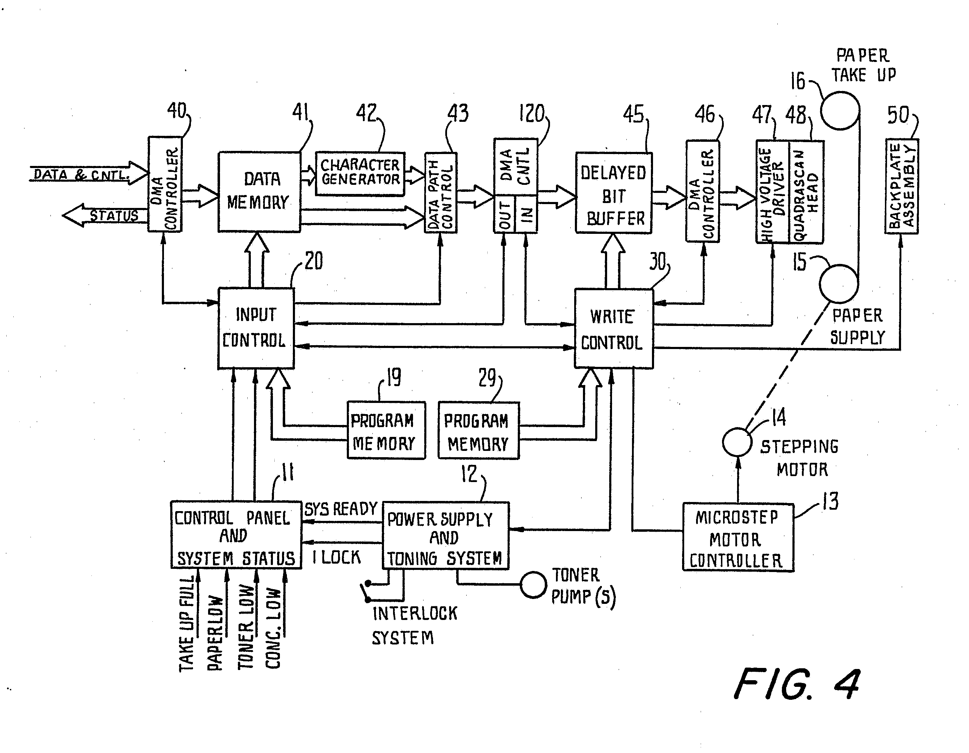

Referring to Figure 4, a block diagram of an electrostatic printer/plotter is shown. U.S. Patent 4,417,391, filed June 8, 1982, and issued November 29, 1983, to Rutherford et al is hereby incorporated by reference. The document entitled "Service and Maintenance Manual" published in February 1980 by Benson-Varian of 385 Ravendale Drive, Mountain View, California 94043 and subtitled "Users Manual, Model 9326 Printer/Plotter, Publication No. 03-996363B" is incorporated herein by reference.

The structure and operation of the preferred embodiment is substantially as described in the incorporated references except for changes resulting from modifications to the INPUT CONTROL 20 and the WRITE CONTROL 30 as described hereafter.

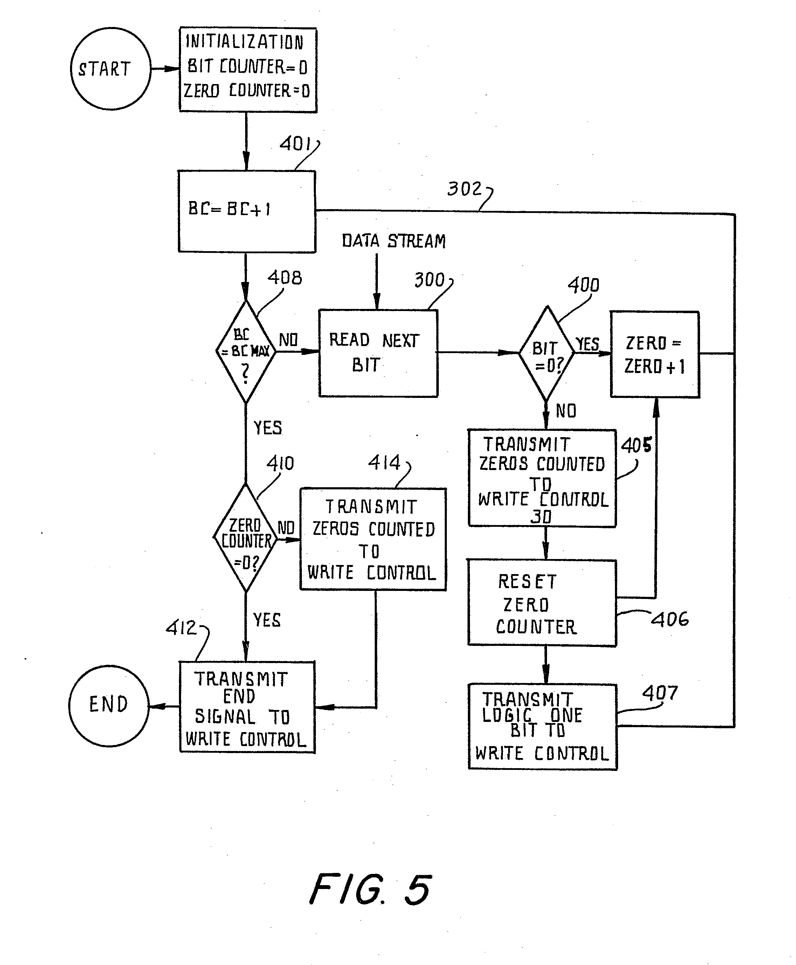

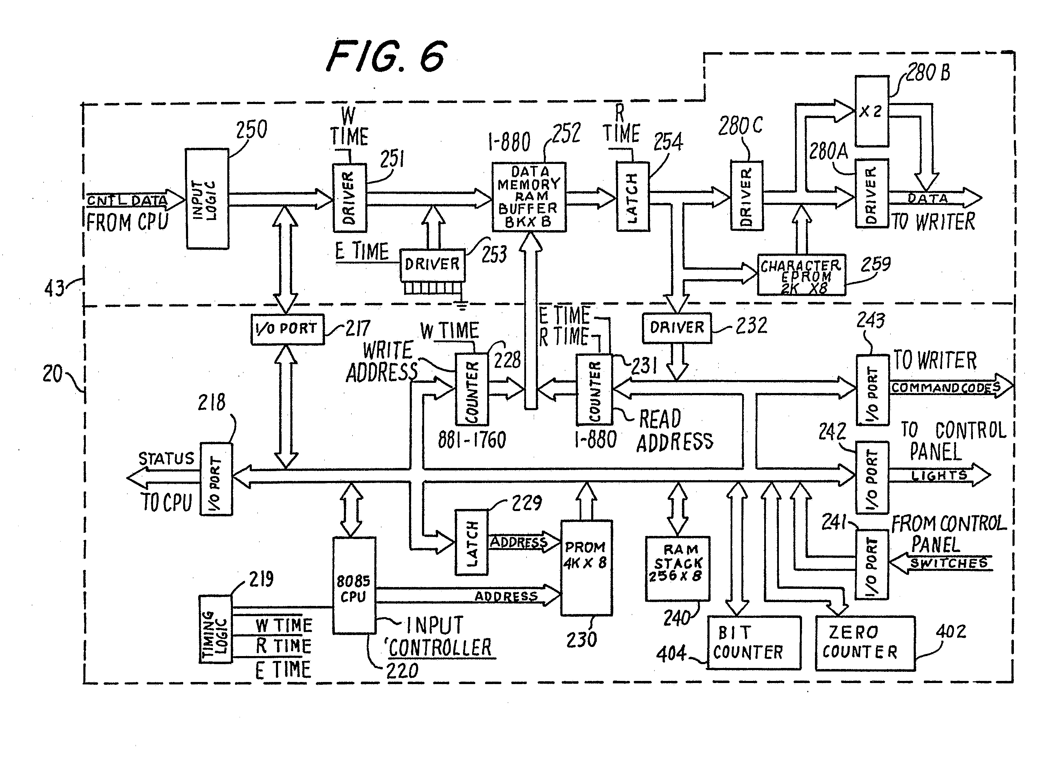

Referring to Figures 5 and 6, each bit of data corresponding to a scan line of an image to be displayed is applied to INPUT CONTROL 20 by the DMA CONTROLLER 40 as shown in step 300. The operations depicted in Figure 5 are implemented by bit counter 404 and zero counter 402 shown in Figure 6 and in part by firmware resident in Prom 230 of INPUT CONTROLLER 20. Prom 230 is more fully described in the incorporated Service and Maintenance Manual and in U.S. Patent 4,417,391 and is shown in Figure 4 of incorporated U.S. Patent 4,417,391. The input data applied includes a logic zero for each styli position which is not to be driven and does not correspond to a displayable dot and a logic one for each styli position which is to be driven and does correspond to a displayable dot. Step 400 determines whether the bit is a logic zero. If the bit is a logic zero, a zero counter 402 is updated in step 401 and the zero counter 402 updates a bit counter 404 shown in Figure 6. If the bit is not a logic zero, the count of the zero counter 402 is transmitted to the WRITE CONTROL 30 as shown by step 405. The zero counter 402 is then reset in 406 and in step 407 the logic one bit is sent to the WRITE CONTROL 30 and the bit counter 404.

The bit counter 404 and the zero counter 402 are initialized to a zero count in response to signals from the DMA CONTROLLER 40 and the CONTROL PANEL 11.

Referring to the bit counter 404, the count of counter 404 shown in Figure 6 and step 401 shown in Figure 5, is tested by the INPUT CONTROL 20 in step 408 to determine if the bit count, shown as BC in step 401 and step 408, exceeds the maximum bit count (BC MAX) corresponding to the number of styli in the head 48 for a given raster line. If the bit count does not exceed BC MAX then the INPUT CONTROL 20 reads the next bit as shown in step 300. If the count in bit counter 404 does exceed BC MAX then the input control in step 410 checks to see if the count in the zero counter 402 is zero. If it is, then an end signal is transmitted to the WRITE CONTROL 30 as shown in step 412. If the count in zero counter 402 is not zero, then the count in zero counter 402 and an end signal are transmitted to the WRITE CONTROL 30 as shown in step 414.

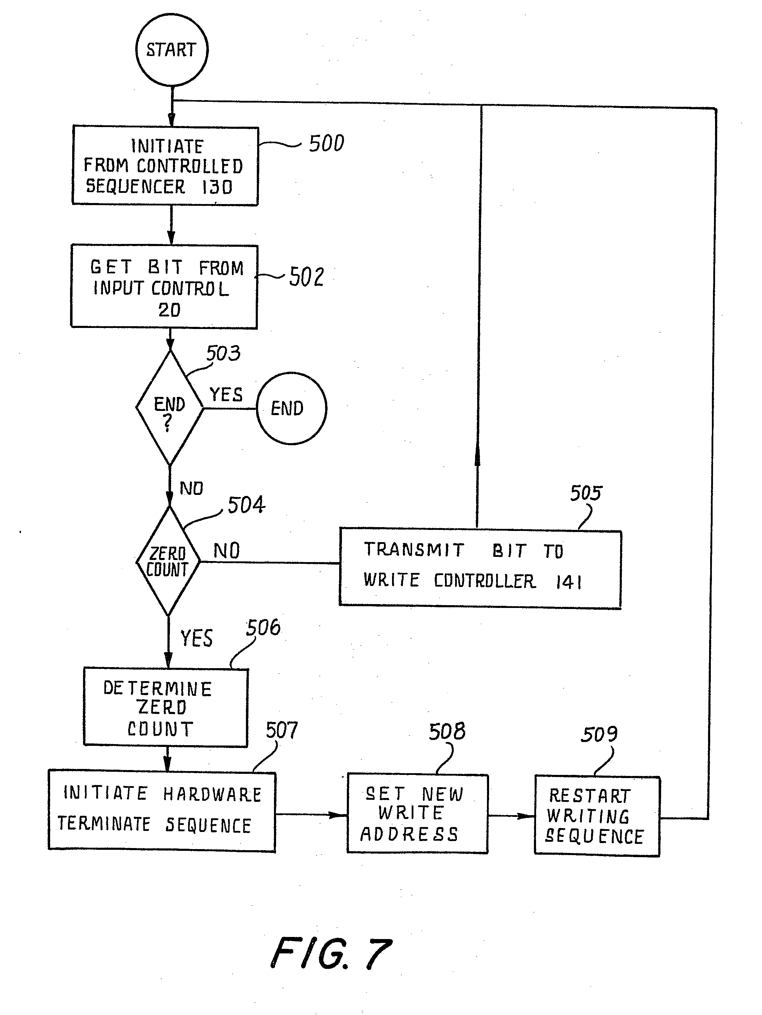

Referring to Figure 5 of incorporated U.S. Patent 4,417,391, the prom controlled sequencer 130 of the WRITE CONTROL 30 is initiated as shown in step 500 of Figure 7. The operations depicted in Figure 7 are implemented in part by firmware resident in Prom 143 of the WRITE CONTROL 30. Prom 143 is more fully described in the incorporated Service and Maintenance Manual and in U.S. Patent 4,417,391 and is shown in Figure 5 of incorporated U.S. Patent 4,417,391. Referring again to Figure 7, the WRITE CONTROL 30 in step 502 receives a bit from the INPUT CONTROL 20. In step 503 the WRITE CONTROL 30 tests the bit to determine if the bit corresponds to the end signal generated in step 412 of Figure 5. If yes, then the operation is completed for the scan line; if no, then the WRITE CONTROL 30 in step 504 checks for a zero count transmitted from step 405 of Figure 5. If there is no zero count, then the bit is transmitted in step 505 to the WRITE CONTROLLER 141, shown in Figure 5 of incorporated U.S. Patent 4,417,391, and step 502 is repeated. If there is a zero count, then the WRITE CONTROL 30 determines the zero count data transmitted in step 405 of Figure 5, initiates in step 507 a hardware terminate sequence resident in firmware within the prom 143. The WRITE CONTROL 30 then sets a new write address as shown in step 508 and a writing sequence resident within the prom 143 is restarted, as shown in block 509, and step 502 repeated.

## CLAIMS

1. A raster scan electrostatic printer/plotter characterized by:

an electrostatic printhead having a plurality of styli disposed in an array;

a plurality of backplates positioned in an array corresponding to the plurality of styli;

input control means coupled to receive an applied input data signal for detecting portions of the applied input data signal corresponding to elements of a raster scan line which are not to be displayed and producing a control output in response to the applied input data; and

write control means coupled to the electrostatic print head, the plurality of backplates and the input control means for selectively charging backplates in response to the control output.

2. A printer/plotter as in Claim 1 characterized by driver means coupled to the electrostatic printhead and to receive the control signal from the input control means for selectively driving styli in the electrostatic printhead in response to the control output.

3. A method for increasing the speed of a raster scan electrostatic printer/plotter having a printhead with a plurality of styli wherein an applied input signal corresponding to displayable elements of a raster scan line comprises a plurality of data bits wherein a bit having a first logic state corresponds to a printable dot and a bit having a second logic state corresponds to a nonprintable gap characterized by the steps of:

detecting bits of an applied input signal having a second logic state;

counting the bits detected; and

changing the write address of the next stylus of the printhead styli to be driven in response to the count.

4. A method for increasing the speed of a raster scan electrostatic printer/plotter having a printhead and a plurality of backplates wherein an applied input signal corresponding to displayable elements of a raster scan line comprises a plurality of data bits wherein a bit having a first logic state corresponds to a printable dot and a bit having a second logic state corresponds to a nonprintable gap characterized by the steps of:

detecting bits of an applied input signal having a second logic state;

counting the bits detected; and

charging selected backplates in response to the count.

5. A method for increasing the speed of a raster scan printer/plotter characterized by the steps:

detecting data corresponding to nondisplayable gaps in a raster line; and

altering the write address of the next portion of the raster line to be printed in response to the detection.

6. A method as in Claim 5 wherein the step of altering is characterized by:

counting the number of sequential non-displayable gaps; and

increasing the write address by an amount corresponding to the count.

0165178

TIME

BACKPLATES

PRIOR ART

*FIG. 1*

BACKPLATES

SKIP BACKPLATE 4
SKIP BACKPLATE 5
SKIP BACKPLATE 6

*FIG. 2*

BACKPLATES

SKIP LAST HALF OF BACKPLATE 3
SKIP BACKPLATE 4

SKIP LAST HALF BACKPLATE 6
SKIP BACKPLATE 7
SKIP BACKPLATE 8
SKIP FIRST HALF OF BACKPLATE 9

*FIG. 3*

**FIG. 4**

0165178

FIG. 5

# FIG. 6

0165178

FIG. 7